# EUROPÄISCHE PATENTSCHRIFT

(11) **EP 2 294 162 B1**
(45) Veröffentlichungstag und Bekanntmachung des Hinweises auf die Patenterteilung: **18.01.2012**
(21) Anmeldenummer: 09765475.0
(22) Anmeldetag: 07.05.2009
(51) Int. Cl.: C10G 2/00, C01B 3/12, C10J 3/00

(54) **VERFAHREN ZUM BETREIBEN EINER FISCHER-TROPSCH-SYNTHESE**
METHOD FOR OPERATING A FISCHER-TROPSCH SYNTHESIS
PROCÉDÉ D EXPLOITATION D UNE SYNTHÈSE DE FISCHER-TROPSCH

(30) Priorität: 28.05.2008 DE 102008025577
(43) Veröffentlichungstag der Anmeldung: 16.03.2011
(73) Patentinhaber: ThyssenKrupp Uhde GmbH, 44141 Dortmund (DE)
(72) Erfinder: MENZEL, Johannes, 45731 Waltrop (DE)
(74) Vertreter: Albrecht, Rainer Harald
(86) Internationale Anmeldenummer: PCT/EP2009/003250
(87) Internationale Veröffentlichungsnummer: WO 2009/152895

(56) Entgegenhaltungen:
- EP-A- 1 860 063
- EP-A- 1 935 845
- WO-A-03/035590
- WO-A-2005/005576
- WO-A-2006/134471
- WO-A-2007/069197
- US-A1- 2003 018 086
- US-B1- 6 306 917
- US-B1- 7 300 642

## Beschreibung

Die Erfindung betrifft ein Verfahren zum Betreiben einer Fischer-Tropsch-Synthese und eine entsprechende Aulage.

Das zur Bildung von Kohlenwasserstoffen verwendete Verfahren der fischer Tropsch-Synthese (FTS) ist seit vielen Jahrzehnten bekannt und wird beispielsweise in ULLMANNS Encyklopädie der technischen Chemie, 4. Aufl. 14, 329 ff, Verlag Chemie, Weinheim (1977) ausführlich beschrieben. Bei diesem Verfahren wird Rohgas, bei dem es sich zumeist um Synthesegas aus der Kohlevergasung handelt, welches nach partieller Oxidation von Kokskohle über wiegend aus Kohlenmonoxid (CO) und Wasserstoff (H₂) besteht, durch heterogene Katalyse zu flüssigen Kohlenwasserstoffen umgesetzt. Neben einem verbleibenden FTS-Restgas entstehen als flüssige Produkte insbesondere Aliphate und Olefine. Vor dem Hintergrund, dass in den letzten Jahren die Kosten für raffinierte Rohölerzeugnisse stetig gewachsen sind, hat das FTS-Verfahren wieder an Bedeutung gewonnen.

In heute betriebenen Anlagen, die über eine Fischer-Tropsch-Syntheseeinheit (FTS-Einheit) verfügen, ist bei Verwendung überwiegend eisenhaltiger Katalysatoren in dem Reaktor der FTS-Einheit eine Gaszusammensetzung mit einem H₂ : CO-Molverhältnis von etwa 2 : 1 im Hinblick auf eine optimale Ausbeute anzustreben. Zur verbesserten Ausnutzung der im Einsatzgas enthaltenen CO- und H₂-Bestandteile wird ein Teil des FTS-Produktgases verdichtet und in den Einsatzgasstrom zurückgeführt. Das Rückführverhältnis wird dabei so gewählt, dass bis zur zweifachen Menge des Einsatzgases rezirkuliert werden. Begrenzt wird das Rückführverhältnis durch den Umstand, dass sich durch wiederholte Rückführung der Anteil an Inertgasen, wie Stickstoff, Argon und Kohlendioxid (CO₂), sukzessive erhöht, wodurch eine weitere Rückführung wirtschaftlich nicht sinnvoll ist. Insbesondere der CO₂-Anteil steigt überproportional im Prozessgas an, da bei der Fischer-Tropsch-Synthese ein Teil des eingesetzten CO zu CO₂ umgesetzt wird. Dies begrenzt die Ausbeute des eingesetzten Rohgases auf Rückführverhältnisse von kleiner 2,5, wobei das verbleibende Restgas, welches immer noch CO und H₂ enthält, aus dem Prozess ausgeschleust wird.

Das H₂ : CO-Molverhältnis eines aus der Kohlevergasung gewonnenen Synthesegases beträgt etwa 1 : 3 und ist somit für eine direkte Zuführung in einen Fischer-Tropsch-Synthesereaktor prinzipiell ungeeignet. Bei den gegenwärtigen Anlagekonzepten wird ein Teilstrom des Rohgases daher vor der Zuführung in die FTS-Einheit aufbereitet, wobei die Prozessgasvorbehandlung im Wesentlichen aus einer Entschwefelungsstufe und einer CO-Konvertierungsstufe besteht. Es wird dabei unterschieden zwischen schwefelhaltiger Konvertierung (Sour-Shift) und entschwefelter Konvertierung {Sweet-Shift). In beiden Fällen wird das H₂ : CO-Molverhältnis im Prozessgas dadurch angepasst, dass Teile des enthaltenen CO mit Wasserdampf zu H₂ und CO₂ reagieren.

Da bei dem Verfahren unter anderem durch die erforderliche Kompressorleistung ein relativ hoher Energiebedarf anfällt, wird zur Verbesserung der Energiebilanz üblicherweise ein Teilstrom des FTS-Restgases einer Energierückgewinnungsstufe zugeführt. Hier wird mittels einer oder mehrer Gasturbinen in Kombination mit einem oder mehreren Generatoren Strom erzeugt, der der Anlage im Betrieb wieder zur Verfügung gestellt wird.

Vor diesem Hintergrund liegt der Erfindung die Aufgabe zugrunde, ein Ver fahren anzugeben, mit dem die Ausbeute des eingesetzten Gases aus der Kohlevergasung verbessert werden kann, ohne dass der apparative Aufwand wesentlich höher wäre als der für den Stand der Technik benötigte. Gegenstand der Erfindung- und Lösung dieser Aufgabe ist ein Verfahren nach Anspruch 1. Bei dem erfindungsgemäßen Verfahren wird ein CO und H₂ enthaltendes Rohgas aus einer Kohlevergasung entschwefelt und anschließend direkt als Einsatzgas einer Fischer-Tropsch-Syntheseeinheit zugeführt, in dem durch katalytische Reaktionen aus Kohlenoxiden und Wasserstoff Kohlenwasserstoffe gebildet werden. Die Kohlenwasserstoffe werden als Flüssigprodukte abgetrennt. Ein die FTS-Syntheseeinheit verlassender CO- und CO₂-haltiger Gasstrom wird verdichtet und einer Konvertierungsstufe zugeführt, in der CO mit Wasserdampf in H₂ und CO₂ umgewandelt wird. Das die Konver-tierungsstufe verlassende Gas wird nach einer Gasaufbereitung, in der CO₂ und/oder weitere Bestandteile außer H2 entfernt werden, als H₂-reiches Gas zusammen mit dem entschwefelten Einsatzgas in die Fischer-Tropsch-Syntheseeinheit zurückgeführt. Als vorteilhaft erweist sich hierbei, dass durch die direkte Zuführung des entschwefelten Rohgases der Aufwand für die Entschwefelung kleiner wird, da nur nicht-konvertiertes Gas zu entschwefeln ist. Außerdem liegt der CO-Gehalt des Prozessgases beim Eintritt in die Konvertierungsstufe verfahrensbedingt unter 20%. Daher ist es ausreichend, die Konvertierungsstufe mit nur einem Reaktor auszustatten. Bei herkömmlichen Verfahren beträgt der CO-Anteil beim Eintritt in die Konvertierungsstufe mehr als 50%, so dass dort zur Konvertierung ein zweiter Reaktor sowie ein Wärmetauscher erforderlich sind.

Reicht der Anteil des im rückgeführten Gases befindlichen Wasserstoffs nicht für die gewünschte Einstellung der Einsatzgaszusammensetzung zur Fischer Tropsch-Synthese aus, wird Anspruch 1 ein Teilstrom des entschwefelten Einsatzgases abgezweigt und vor dem Verdichter dem im Kreis geführten Gasstrom zugeführt werden. Auf diese Weise kann der H₂-Anteil in dem Gasstrom erhöht werden, der dem FTS-Reaktor zugeführt wird.

In diesem Gasstrom wird ein H₂ : CO-Molverhältnis von mindestens 1,5: 1 eingestellt. Ein Verhältnis von 2 : 1 ist im Hinblick auf die FTS-Produktausbeute bevorzugt.

Für die Gasaufbereitung bieten sich verschiedene Verfahren zur Entfernung von CO₂ aus dem rückgeführten Gas an. Die Gasaufbereitung des die Konvertierungsstufe verlassenden Gasstromes kann aus einer Gaswäsche bestehen. Diese erfindungsgemäße Verfahrensweise ermöglicht eine höhere Rohgasausbeute, da das in der FTS-Einheit erzeugte CO₂ nahezu vollständig aus dem FTS-Recyclegas entfernt wird, wodurch sich der Kreisgasstrom verkleinert. Das erlaubt gegenüber bisherigen Prozesskonzepten eine höhere Anreicherung an Inertgasbestandteilen im Prozessgas, was dann dazu führt, dass die CO- und H₂-Konzentrationen im auszuschleusenden Restgas aus der Fischer-Tropsch-Synthese deutlich niedriger ist als bei bisherigen Konzepten.

In einer weiteren Variante des Verfahrens ist vorgesehen, dass aus dem Gasstrom, der die Syntheseeinheit verlässt, ein Teilstrom ausgeschleust wird, um zu vermeiden, dass sich leichte Kohlenwasserstoffe und Inertgaskomponenten zu sehr anreichern. Der ausgeschleuste Teilstrom wird zur Energierückgewinnung einer Gasturbine zugeführt.

Durch die erfindungsgemäße Anordnung der Verfahrensstufen wird entweder bei gleicher Menge des Einsatzgasstromes die FTS-Produktausbeute im Reaktor erhöht oder es kann bei gleicher FTS-Produktausbeute die Dimension des FTS-Reaktors reduziert werden, was letztlich zu einer Kostenminderung führt. Die kleinere Dimensionierung des Reaktors führt auch zu einem kleineren Recyclegasstrom sowie zu einem kleineren Kompressor.

Eine alternative Ausgestaltung des erfindungsgemäßen Verfahrens besteht darin, dass zur Gasaufbereitung des die Konvertierungsstufe verlassenden Gasstroms eine Druckwechseladsorption verwendet wird, wobei auf der Druckseite im Wesentlichen reiner Wasserstoff anfällt, womit die Anreicherung von unerwünschten Komponenten vernachlässigbar ist und daher kein weiterer Ausschleusstrom notwendig ist. Der so gewonnene, nahezu reine Wasserstoff wird mit dem Einsatzgas gemischt und in die Syntheseeinheit zurückgeführt. Ferner fällt dabei auf einem geringeren Druckniveau ein Gasgemisch an, das zur Dampferzeugung in einem Abhitzekessel genutzt wird. Der so erzeugte Dampf wird zur Energierückgewinnung einer Dampfturbine zugeführt. Auf diese Weise entfällt neben der teuren Gaswäsche der Einsatz einer oder mehrerer kostenaufwendiger Gasturbinen, wie sie in herkömmlichen Verfahrenskonzepten Anwendung finden. Die Stromerzeugung mit einer Dampfturbine, der ein Abhitzekessel und ein Dampferzeuger vorgeschaltet ist, hat den weiteren Vorteil, dass bei einem Ausfall der Kohlevergasung die Stromversorgung durch die Energierückgewinnungsstufe durch Einsatz eines alternativen Brennstoffs mit hoher Verfügbarkeit gewährleistet werden könnte. Darüber hinaus entfällt bei dieser Verfahrensvariante ohne direkten Anfall von FTS-Restgas eine bei herkömmlichen Verfahrenskonzepten benötigte kleine Druckwechseladsorptions-Anlage zur H₂-Erzeugung für die Hydrierung der schweren Fischer-Tropsch-Produkte. Es kann ferner vorgesehen sein, dass der die Druckwechseladsorption verlassende Gasstrom verdichtet wird und anschließend einer Gasturbine zugeführt wird.

Ferner ist Gegenstand der Erfindung eine Anlage zum Betreiben einer Fischer Tropsch-Synthese. Zu ihrem grundsätzlichen Aufbau gehört eine Fischer-Tropsch-Syntheseeinheit, die einen Fischer-Tropsch-Synthesereaktor, eine Flüssigproduktabtrennung umfasst sowie eine Heavy-End-Recovery-Einheit umfasst. Zum Aufbau der erfindungsgemäßen Anlage gehört außerdem eine vorgeschaltete Vorrichtung zur Entschwefelung eines durch Kohlevergasung erzeugten, CO und H₂ enthaltenden Rohgases und eine Rückführeinrichtung zur Rückführung eines die Fischer-Tropsch-Syntheseeinheit verlassenden Gasstroms in das der Fischer-Tropsch-Syntheseeinheit zugeführten, entschwefelten Einsatzgas. Die Rückführeinrichtung weist zur Rückführung des Gasstroms einen Verdichter, einen mit Wasserdampf betriebenen Konverter zur Umwandlung von CO in H₂ und CO₂ sowie eine Vorrichtung zur Entfernung von CO₂ aus dem im Kreis geführten Gasstrom auf.

In der erfindungsgemäßen Anlage ist die Einrichtung zur Rückführung des Gasstroms durch eine Abzweigleitung mit einer das entschwefelte Einsatzgas führenden Leitung verbunden, wobei die Abzweigleitung in Strömungsrichtung vor dem Verdichter an die Rückführeinrichtung angeschlossen ist. Sie gestattet beispielsweise beim Anfahren der Anlage einen kleinen Teilstrom aus dem entschwefelten Rohgas direkt in die Konvertierungsstufe zu leiten, bis ausreichend FTS-Produktgas vorhanden ist.

Gemäß einer weiteren Gestaltung der erfindungsgemäßen Anlage ist vorgesehen, dass die Vorrichtung zur Entfernung von CO₂ einen Gaswäscher aufweist, wobei der Gaswäscher wahlweise mit einem physikalischen Lösungsmittel betrieben werden kann. In einer bevorzugten Ausführung der Anlage weist die Vorrichtung zur Entfernung von CO₂ einen im Wechsel betriebenen Adsorber zur Druckwechseladsorption auf. Dabei kann vorgesehen sein, dass der Druckwechseladsorption eine Gaswäsche vorgelagert ist, wodurch eine Abtrennung von CO₂ zur CO₂-Sequestrierung möglich ist.

Im Folgenden wird die Erfindung anhand einer lediglich ein Ausführungsbeispiel darstellenden Zeichnung erläutert. Die Figuren zeigen schematisch:
- Fig. 1: ein Verfahrensschema mit einer CO₂-Wäsche,
- Fig. 2: ein Verfahrensschema mit einem Adsorber für eine Druckwechseladsorption.

Zu dem erfindungsgemäßen Verfahren, welches in der Zeichnung schematisch dargestellt ist, gehört grundsätzlich, dass ein CO und H₂ enthaltendes Rohgas aus einer Kohlevergasung 1 in einer Vorrichtung zur Entschwefelung 2 zunächst entschwefelt und anschließend als Einsatzgas mit einem H₂ : CO-Ver hältnis von mindestens 1,5 : 1 einer Fischer-Tropsch-Syntheseeinheit 3 zugeführt wird, in der durch katalytische Reaktionen Kohlenwasserstoffe gebildet werden, welche als Flüssigprodukte 4 abgetrennt werden. Der die Fischer Tropsch-Syntheseeinheit 3 verlassende CO- und CO₂-haltige Gasstrom wird in einem Verdichter 5 verdichtet und sodann einem Konverter 6 zugeführt, in dem CO mit Wasserdampf nach einem Sweet-Shift-Verfahren in H₂ und CO₂ umgewandelt wird. Von dort wird der Gasstrom einer Gasaufbereitung zugeführt, in der CO₂ entfernt wird. Von der Gasaufbereitung wird das H₂-reiche Prozessgas zusammen mit dem entschwefelten Einsatzgas in die Fischer Tropsch-Syntheseeinheit 3 zurückgeführt. Außerdem wird in dem in der Zeichnung verdeutlichten erfindungsgemäßen Verfahren durch eine mit einem Ventil 7 ausgestattete Abzweigleitung 8 ein Teilstrom des entschwefelten Einsatzgases abgezweigt und vor dem Verdichter 5 dem im Kreis geführten Gasstrom zugeführt.

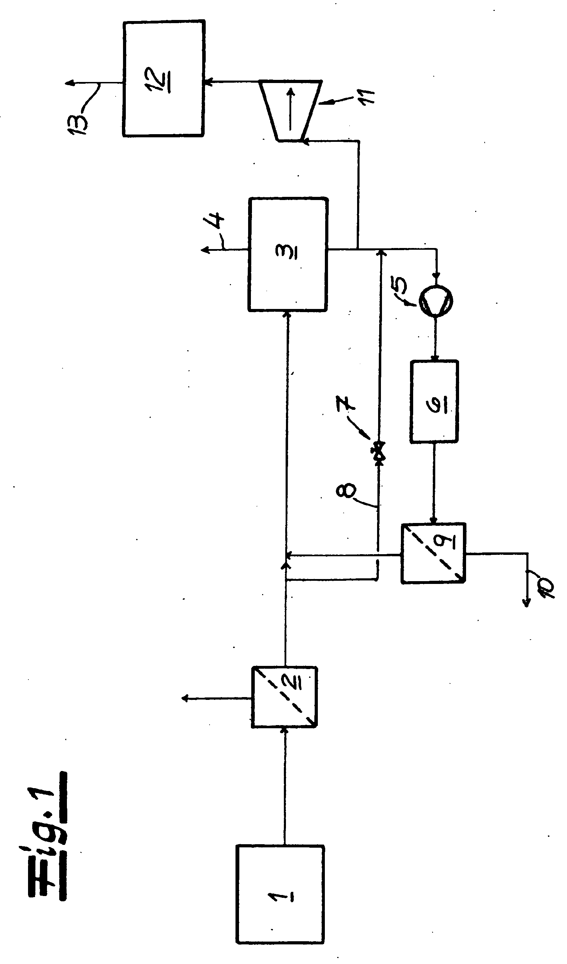

In dem in Fig. 1 schematisch dargestellten Verfahren besteht die Gasaufbereitung des die Konvertierungsstufe verlassenden Gasstroms aus einem Gaswäscher 9. Das CO₂ wird aus dem Prozess als Abgas 10 abgeführt. Aus dem Gasstrom, der die Fischer-Tropsch-Syntheseeinheit 3 verlässt, wird ein Teilstrom ausgeschleust und zur Energiegewinnung einer Gasturbine 11 zugeführt, die an ein Generatormodul 12 angeschlossen ist. Dieser Gasturbine kann in einer Variante der Anlage auch eine Heavy-End-Recovery-Einheit vorgeschaltet sein. Das in der Energierückgewinnung verbleibende Gas wird als Prozessabgas 13 abgeführt.

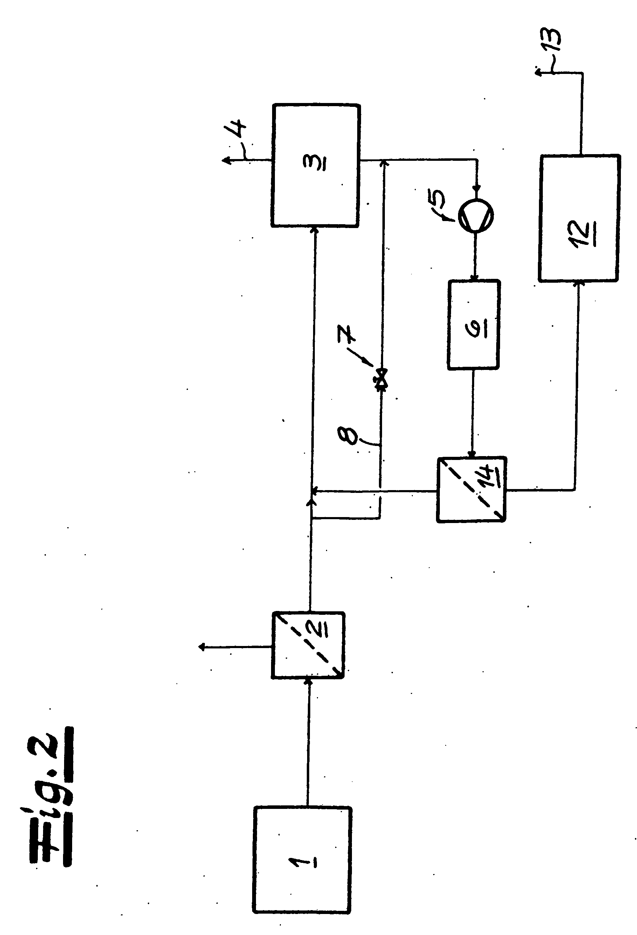

Dem in Fig. 2 dargestellten Verfahren ist zu entnehmen, dass die Gasaufbereitung des die Konvertierungsstufe 6 verlassenden Gasstroms aus einer Druckwechseladsorption besteht, wobei auf der Druckseite eines Adsorbers 14 im Wesentlichen reiner Wasserstoff anfällt, der mit dem Einsatzgas gemischt und in die Fischer-Tropsch-Syntheseeinheit 3 zurückgeführt wird. Hierbei fällt ferner auf einem geringeren Druckniveau ein Gasgemisch an, das zur Dampferzeugung in einem Abhitzekessel genutzt wird, mit dem zur Stromerzeugung eine Dampfturbine angetrieben wird, die an ein Generatormodul 12 angeschlossen ist. Das Prozessabgas 13 wird aus der Energierückgewinnungsstufe abgeführt.

## Patentansprüche

1. Verfahren zum Betreiben einer Fischer-Tropsch-Synthese,
wobei ein CO und H₂ enthaltendes Rohgas aus einer Kohlevergasung entschwefelt und anschließend als Einsatzgas einer Fischer-Tropsch-Syntheseeinheit (3) zugeführt wird, in der durch katalytische Reaktionen aus Kohlenoxiden und Wasserstoff Kohlenwasserstoffe gebildet werden,
wobei die Kohlenwasserstoffe als Flüssigprodukte (4) abgetrennt werden,
wobei ein die Fischer-Tropsch-Syntheseeinheit (3) verlassender CO- und CO₂-haltiger Gasstrom verdichtet und einer Konvertierungsstufe (6) zugeführt wird, in der CO mit Wasserdampf in H₂ und CO₂ umgewandelt wird, und
wobei das die Konvertierungsstufe (6) verlassende Gas nach einer Gasaufbereitung (9, 14), in der CO₂ und/oder weitere Bestandteile außer H₂ entfernt werden, als H₂-reiches Gas zusammen mit dem entschwefelten Einsatzgas in die Fischer-Tropsch-Syntheseeinheit (3) zurückgeführt wird,
**dadurch gekennzeichnet,**
**dass** ein Teilstrom (8) des entschwefelten Einsatzgases abgezweigt und vor dem Verdichter (5) dem im Kreis geführten Gasstrom zugeführt wird.

2. Verfahren nach Anspruch 1, **dadurch gekennzeichnet, dass** in dem Gasstrom, der der Fischer-Tropsch-Syntheseeinheit (3) zugeführt wird, ein H₂ : CO-Molverhältnis von mindestens 1,5 : 1 eingestellt wird.

3. Verfahren nach Anspruch 1 oder 2, **dadurch gekennzeichnet, dass** die Gasaufbereitung des die Konvertierungsstufe verlassenden Gasstromes aus einer Gaswäsche (9) besteht.

4. Verfahren nach Anspruch 3, **dadurch gekennzeichnet, dass** aus dem Gasstrom, der die Fischer-Tropsch-Syntheseeinheit (3) verlässt, ein Teilstrom ausgeschleust und zur Energierückgewinnung einer Gasturbine (11) zugeführt wird.

5. Verfahren nach einem der Ansprüche 1 bis 4, **dadurch gekennzeichnet, dass** zur Gasaufbereitung des die Konvertierungsstufe verlassenden Gasstromes eine Druckwechseladsorption (14) verwendet wird, wobei auf der Druckseite im Wesentlichen reiner Wasserstoff anfällt, der mit dem Einsatzgas gemischt und in die Fischer-Tropsch-Syntheseeinheit (3) zurückgeführt wird, und wobei ferner auf einem geringeren Druckniveau ein Gasgemisch anfällt, das zur Dampferzeugung in einem Abhitzekessel genutzt wird.

6. Verfahren nach Anspruch 5, **dadurch gekennzeichnet, dass** der die Druckwechseladsorption (14) verlassende Gasstrom verdichtet und anschließend einer Gasturbine (11) zugeführt wird.

7. Anlage zur Durchführung des Verfahrens nach einem der Ansprüche 1 bis 6, mit
einer Fischer-Tropsch-Syntheseeinheit (3), die einen Fischer-Tropsch-Synthesereaktor und eine Flüssigproduktabtrennung umfasst,
einer vorgeschalteten Vorrichtung zur Entschwefelung (2) eines durch Kohlevergasung (1) erzeugten, CO und H₂ enthaltenden Rohgases,
einer Rückführeinrichtung zur Rückführung eines die Fischer-Tropsch-Syntheseeinheit (3) verlassenden Gasstromes in das der Fischer-Tropsch-Syntheseeinheit (3) zugeführten entschwefelten Einsatzgas,
wobei die Rückführeinrichtung zur Rückführung des Gasstromes einen Verdichter (5), einen mit Wasserdampf betriebenen Konverter (6) zur Umwandlung von CO in H₂ und CO₂ sowie eine Vorrichtung (9, 14) zur Entfernung von CO₂ aus dem im Kreis geführten Gasstrom aufweist, **dadurch gekennzeichnet,**
**dass** die Einrichtung zur Rückführung des Gasstromes durch eine Abzweigleitung (8) mit einer das entschwefelte Einsatzgas führenden Leitung verbunden ist, wobei die Abzweigleitung (8) in Strömungsrichtung vor dem Verdichter (5) an die Rückführeinrichtung angeschlossen ist.

8. Anlage nach Anspruch 7, **dadurch gekennzeichnet, dass** die Vorrichtung zur Entfernung von CO₂ einen Gaswäscher (9) aufweist.

9. Anlage nach Anspruch 8, **dadurch gekennzeichnet, dass** der Gaswäscher (9) mit einem physikalischen Lösungsmittel betrieben wird.

10. Anlage nach einem der Ansprüche 7 bis 9, **dadurch gekennzeichnet, dass** die Vorrichtung zur Entfernung von CO₂ einen im Wechsel betriebenen Adsorber (14) zur Druckwechseladsorption aufweist.

11. Anlage nach Anspruch 10, **dadurch gekennzeichnet, dass** der Druckwechseladsorption ein Gaswäscher vorgeschaltet ist, wodurch eine Abtrennung von CO₂ zur CO₂-Sequestrierung möglich ist.

## Claims

1. A process for operating a Fischer-Tropsch synthesis,
wherein a feed gas containing CO and H₂ from coal gasification is desulphurised and subsequently fed into a Fischer-Tropsch synthesis unit (3) as an input gas, wherein hydrocarbons are formed from carbonic oxides and hydrogen by catalytic reactions,
wherein the hydrocarbons are separated as liquid products (4), wherein a gas flow containing CO and CO₂ leaving the Fischer-Tropsch synthesis unit (3) is compressed and fed into a conversion stage (6), wherein CO and steam are transformed into H₂ and CO₂ and
wherein the gas leaving the conversion stage (6) is fed back into the Fischer-Tropsch synthesis unit (3) as a gas rich in H₂, along with the desulphurised input gas, after the gas is treated (9, 14) to remove CO₂ and/or further components other than H₂,
**characterised in that**
a partial flow (8) of desulphurised input gas is channelled off and fed into the gas flow being circulated upstream of the condenser (5).

2. The process according to claim 1, **characterised in that** there is an H₂:CO molar ratio of at least 1.5:1 in the gas flow that is fed into the Fischer-Tropsch synthesis unit (3),

3. The process according to claim 1 or 2, **characterised in that** the gas treatment of the gas flow leaving the conversion stage consists of scrubbing (9).

4. The process according to claim 3, **characterised in that** a partial flow of the gas flow leaving the Fischer-Tropsch synthesis unit (3) is channelled off and fed to a gas turbine (11) for energy recovery.

5. The process according to one of the claims 1 to 4, **characterised in that** pressure swing adsorption (14) is used for the treatment of the gas flow leaving the conversion stage, wherein essentially pure hydrogen occurs on the pressure side, which is mixed with the input gas and fed back into the Fischer-Tropsch synthesis unit (3), and wherein a gas mixture also occurs at a lower pressure level, which is used to generate steam in a heat recovery boiler.

6. The process according to claim 5, **characterised in that** the gas flow leaving the pressure swing adsorption (14) is compressed and subsequently fed to a gas turbine (11).

7. A system for carrying out the process according to one of the claims 1 to 6, comprising
a Fischer-Tropsch synthesis unit (3), which consists of a Fisher-Tropsch synthesis reactor and liquid product separation,
an upstream device for the desulphurisation (2) of a feed gas produced by coal gasification (1) containing CO and H₂,
a recirculation mechanism for recirculating a gas flow leaving the Fischer-Tropsch synthesis unit (3) into the desulphurised input gas fed to the Fischer-Tropsch synthesis unit (3),
wherein the recirculation mechanism for recirculating the gas flow exhibits a condenser (5), a steam-operated converter (6) for transforming CO into H₂ and CO₂ and a device (9, 14) for removing CO₂ from the gas flow circulation, **characterised in that**
the mechanism for recirculating the gas flow is connected by a branch line (8) to a line carrying the desulphurised input gas, wherein the branch line (8) is connected to the recirculating mechanism upstream of the condenser (5) in the flow direction.

8. The system according to claim 7, **characterised in that** the device for removing CO₂ exhibits a gas scrubber (9).

9. The system according to claim 8, **characterised in that** the gas scrubber (9) is operated with a physical solvent.

10. The system according to one of the claims 7 to 9, **characterised in that** in order to remove CO₂ the device has an adsorber (14) operated alternately for pressure swing adsorption.

11. The system according to claim 10, **characterised in that** there is a gas scrubber upstream of the pressure swing adsorption, which enables CO₂ to be separated for CO₂ sequestration.

## Revendications

1. Procédé de mise en oeuvre d'une synthèse Fischer-Tropsch,
dans lequel un gaz brut issu d'une gazéification du charbon et contenant du CO et du H₂ est désulfuré puis acheminé, en tant que gaz de départ, vers une unité de synthèse Fischer-Tropsch (3) dans laquelle des réactions catalytiques conduisent à la formation d'hydrocarbures à partir d'oxydes de carbone et à partir d'hydrogène,
dans lequel les hydrocarbures sont séparés sous forme de produits liquides (4),
dans lequel le débit de gaz contenant du CO et du CO₂, qui est obtenu en sortie de l'unité de synthèse Fischer-Tropsch (3), est comprimé et acheminé vers un étage de conversion (6) dans lequel du CO, avec de la vapeur d'eau, est converti en H₂ et CO₂, et
dans lequel le gaz obtenu en sortie de l'étage de conversion (6) subit d'abord un traitement des gaz (9, 14) dans lequel le CO₂ et/ou d'autres composants sauf le H₂ sont enlevés, pour ensuite être recyclé, en tant que gaz riche en H₂ et ensemble avec le gaz de départ désulfuré, dans l'unité de synthèse Fischer-Tropsch (3),
**caractérisé en ce que**
un débit partiel (8) du gaz de départ désulfuré est dérivé et introduit, en amont du compresseur (5), dans le débit de gaz recyclé.

2. Procédé selon la revendication 1, **caractérisé en ce que**, dans le débit de gaz qui est acheminé vers l'unité de synthèse Fischer-Tropsch (3), on établit un rapport molaire H₂ : CO qui est supérieur ou égal à 1,5 : 1.

3. Procédé selon les revendications 1 ou 2, **caractérisé en ce que** ledit traitement des gaz que subit le débit de gaz obtenu en sortie dudit étage de conversion est constitué par un laveur de gaz (9).

4. Procédé selon la revendication 3, **caractérisé en ce qu'**un débit partiel est dérivé à partir du débit de gaz obtenu en sortie de l'unité de synthèse Fischer-Tropsch (3) et acheminé vers une turbine à gaz (11) afin de récupérer de l'énergie.

5. Procédé selon l'une des revendications 1 à 4, **caractérisé en ce que**, pour traiter le débit de gaz obtenu en sortie dudit étage de conversion, on utilise une adsorption modulée en pression (14) qui permet obtenir, sur le côté sous pression, essentiellement de l'hydrogène pur qui est mélangé avec ledit gaz de départ et recyclé dans l'unité de synthèse Fischer-Tropsch (3) et, en outre, à un niveau de pression inférieur, un mélange de gaz qui est utilisé dans un chaudière de récupération pour générer de la vapeur.

6. Procédé selon la revendication 5, **caractérisé en ce que** le débit de gaz obtenu en sortie de l'adsorption modulée en pression (14) est comprimé puis acheminé vers une turbine à gaz (11).

7. Installation destinée à la mise en oeuvre du procédé selon l'une des revendications 1 à 6, avec
une unité de synthèse Fischer-Tropsch (3) comprenant un réacteur de synthèse Fischer-Tropsch et une séparation des produits liquides,
un dispositif placé en amont et destiné à désulfurer (2) un gaz brut contenant du CO et du H₂ qui est issu d'une gazéification du charbon (1),
un dispositif de recyclage destiné à recycler un débit de gaz obtenu en sortie de l'unité de synthèse Fischer-Tropsch (3) dans le gaz de départ désulfuré qui est acheminé vers l'unité de synthèse Fischer-Tropsch (3),
ledit dispositif de recyclage destiné à recycler ledit débit de gaz comportant un compresseur (5), un convertisseur (6) fonctionnant à la vapeur d'eau destiné à convertir le CO en H₂ et CO₂ ainsi qu'un dispositif (9, 14) destiné à enlever le CO₂ du débit de gaz recyclé, **caractérisée en ce que**
ledit dispositif destiné à recycler ledit débit de gaz est relié, à travers un ligne de dérivation (8), à une ligne dans laquelle circule le gaz de départ désulfuré, la ligne de dérivation (8) étant branchée en amont du compresseur (5), dans le sens de la circulation, sur ledit dispositif de recyclage.

8. Installation selon la revendication 7, **caractérisée en ce que** ledit dispositif destiné à enlever du CO₂ comporte un laveur de gaz (9).

9. Installation selon la revendication 8, **caractérisée en ce que** le laveur de gaz (9) fonctionne avec un solvant à action physique.

10. Installation selon l'une des revendications 7 à 9, **caractérisée en ce que** ledit dispositif destiné à enlever du CO₂ comporte un dispositif d'adsorption (14) fonctionnant en alternance pour mettre en oeuvre l'adsorption modulée en pression.

11. Installation selon la revendication 10, **caractérisé en ce qu'**un laveur de gaz est disposé en amont de ladite adsorption modulée en pression, permettant de séparer du CO₂ en vue d'une séquestration du CO₂.
